Europäisches Patentamt

European Patent Office

Office européen des brevets

(11) Numéro de publication: **0 363 250 B1**

## FASCICULE DE BREVET EUROPEEN

(45) Date de publication de fascicule du brevet: **09.03.94**   (51) Int. Cl.5: **H02M 7/162**, H02M 1/084

(21) Numéro de dépôt: **89402617.8**

(22) Date de dépôt: **25.09.89**

(54) **Procédé et dispositif de déclenchement d'un convertisseur électronique à commutation par le réseau.**

(30) Priorité: **06.10.88 FR 8813118**

(43) Date de publication de la demande:
**11.04.90 Bulletin 90/15**

(45) Mention de la délivrance du brevet:
**09.03.94 Bulletin 94/10**

(84) Etats contractants désignés:
**AT BE CH DE ES GB IT LI LU NL SE**

(56) Documents cités:
**EP-A- 0 057 340
US-A- 3 611 097
US-A- 4 490 780**

**I.E.E.E. TRANSACTIONS ON MAGNETICS vol.
10, no. 3, septembre 1974, pages 973 - 976; K.
HARADA: "Magnetic balanced phase shifter
for polyphase supply"**

(73) Titulaire: **ELECTRICITE DE FRANCE Service
National
2, rue Louis Murat
F-75008 Paris(FR)**

(72) Inventeur: **Maire, Joseph
20 rue du 4 septembre
92130 Issy Les Moulineaux(FR)**
Inventeur: **Chekili, Riadh
7 rue Ali Belhaounf
Megrine-Riadh Tunis(TN)**

(74) Mandataire: **Obolensky, Michel et al
c/o CABINET LAVOIX
2, place d'Estienne d'Orves
F-75441 Paris Cédex 09 (FR)**

**Description**

La présente invention est relative aux convertisseurs électromagnétiques polyphasés à commutation par le réseau destinés à l'alimentation de charges notamment de machines électriques à courant continu à partir du réseau triphasé, tels que le pont de Graetz, et se rapporte plus particulièrement au déclenchement de tels convertisseurs en présence de creux de tension du réseau.

L'utilisation de ces convertisseurs est en plein essor, en particulier dans les domaines de la robotique, de la machine-outil, ainsi que dans celui des grandes industries de transformation. Toutefois, sa mise en oeuvre est parfois handicapée par la présence de creux de tension ou de coupures brèves sur le réseau d'alimentation électrique de ces équipements. Ces perturbations peuvent entraîner, dans certains cas, des défauts de fonctionnement graves susceptibles d'enrayer l'ensemble du processus mobilisant ces entraînements.

Pour prévenir ce type de situation, il existe bien sûr des solutions "toutes faites" utilisant des réserves d'énergie, mais ces solutions sont coûteuses, lourdes et de ce fait réservées à des cas particuliers.

D'autres solutions plus économiques consistent à prévoir, au niveau des commandes, le rattrapage des défauts. Bien que le pire soit évité, le fonctionnement se trouve quand même dégradé pendant la durée de la perturbation, ce qui n'est pas toujours acceptable.

Le besoin se fait donc sentir de mettre au point des moyens de commande assurant le rattrapage des défauts, mais également le respect, dans la mesure du possible, des consignes de fonctionnement pendant la perturbation.

Pour réaliser de tels moyens de commande, les techniques numériques de contrôle commande paraissent tout indiquées, compte tenu de leur souplesse et de leur adaptabilité.

Cependant, les techniques analogiques peuvent également être utilisées.

A titre d'exemple d'application, on va étudier dans un premier temps, le cas du moteur à courant continu alimenté par un pont de Graetz à thyristors. Cependant, une adaptation ultérieure des moyens de commande suivant l'invention à d'autres types de dispositifs d'entraînement électriques à vitesse variable ou à d'autres applications peut également être envisagée.

On va tout d'abord rappeler le comportement d'un pont de Graetz alimentant une machine à courant continu, en présence de perturbations.

Lors de l'apparition d'un creux de tension, sur une ou plusieurs phases du réseau triphasé, diverses situations sont possibles :

1) La chute de tension est suffisamment faible et de courte durée pour que le processus alimenté soit insensible à ces légères variations.

2) Le défaut est plus important, auquel cas deux possibilités sont envisageables :

    a) Le convertisseur fonctionne en redresseur : il y a chute significative de la tension du côté continu. Celle-ci peut provoquer des troubles sérieux au niveau du processus entraîné (perte de couple et de vitesse), bien qu'il n'y ait aucun incident majeur concernant le convertisseur et le moteur.

    b) Le convertisseur fonctionne en onduleur : les problèmes peuvent être plus sérieux.

Il y a :

- soit risque de raté de commutation, aquel cas le moteur voit à ses bornes une tension sinusoïdale de forte amplitude,

- soit risque de réamorçage et mise en court-circuit de la charge.

Dans les deux cas, il peut y avoir dégradation du moteur et du convertisseur.

En présence de creux de tension, il y a baisse de la tension du côté continu.

Un système classique de régulation de la tension ou du courant continu a tendance, en fonctionnement en onduleur, à augmenter l'angle d'amorçage des redresseurs sans tenir compte de l'état du réseau. Il risque ainsi de provoquer les défauts décrits précédemment. Le mode de commande par les angles d'amorçage a donc tendance naturellement à amplifier le phénomène.

A partir de cette valeur d'angle, il convient d'élaborer des impulsions de commande propres à chaque interrupteur. Ces impulsions sont généralement synchronisées à partir de la référence temporelle que constitue le passage par zéro des tensions des phases tous les $\pi/6$.

Si un défaut apparaît entre deux synchronisations, il faut attendre le prochain passage par zéro d'une des tensions de phase, avant de pouvoir prendre en compte ce défaut, ce qui ne peut que rendre la situation plus mauvaise.

On connait cependant, quelques moyens basés sur la commande pour remédier à cet inconvénient.

a) Le blocage d'impulsions

Cette solution est efficace lors d'un fonctionnement en redresseur, mais, lorsque le pont fonctionne en onduleur, elle revient à provoquer un raté de commutation.

b) Le rattrapage de la commande

Cette solution anticipe, lors d'un raté de commutation, la séquence de commande pour ramener le système en fonctionnement normal. Cette technique fonctionne convenablement mais a le désavantage d'attendre que le défaut se soit produit avant d'agir. De plus, si le défaut est important et se prolonge, il y a périodiquement des cycles de raté de commutation - rattrapage de commande.

D'après EP-A-57340, on connaît un dispositif automatique de compensation des variations de tension du secteur alternatif polyphasé appliqué à un convertisseur alternatif continu comportant des moyens de mesure des valeurs instantanées des tensions des phases du secteur d'alimentation du convertisseur et des moyens de compensation permettant de commander l'angle d'amorçage de chaque redresseur.

En conclusion, on ne dispose actuellement que de moyens de rattrapage de défaut plus ou moins performants. Aucun système n'est en mesure de fonctionner convenablement et de façon permanente, en présence d'un réseau perturbé.

L'invention vise à remédier aux inconvénients des moyens de commande connus en créant un montage qui soit capable de piloter un pont de Graetz quel que soit l'état du réseau d'alimentation et lui permet de fonctionner aussi bien en redresseur qu'en onduleur en évitant tout trouble de fonctionnement.

Elle a donc pour objet un procédé de déclenchement d'un convertisseur électronique polyphasé à commutation par le réseau, consistant à mesurer en permanence les valeurs instantanées des tensions des phases du réseau d'alimentation du convertisseur, caractérisé en ce qu'il consiste en outre à élaborer une image de la tension continue désirée à la sortie du convertisseur, à établir diverses combinaisons possibles de tensions de phase du réseau, à comparer à ladite image de la tension continue désirée, les diverses combinaisons possibles des tensions des phases en vue de déterminer la combinaison la plus favorable pour la production de ladite tension de sortie et, si ladite combinaison la plus favorable est différente de celle appliquée au convertisseur à l'instant considéré, et si la polarisation des composants concernés du convertisseur le permet, à provoquer la commutation du convertisseur sur ladite combinaison.

L'invention sera mieux comprise à l'aide de la description qui va suivre, donnée uniquement à titre d'exemple et faite en se référant aux dessins annexés, sur lesquels :

- La Fig.1 est un schéma synoptique d'un dispositif de déclenchement numérique suivant l'invention appliqué à la commande d'une machine électrique à vitesse variable;
- les Fig.2 et 3 sont des diagrammes montrant les allures des tensions des demi-ponts du dispositif de la Fig.1;
- la Fig.4 est un organigramme illustrant le fonctionnement général du dispositif de la Fig.1; et
- la Fig.5 est un organigramme plus détaillé illustrant le fonctionnement du déclencheur.

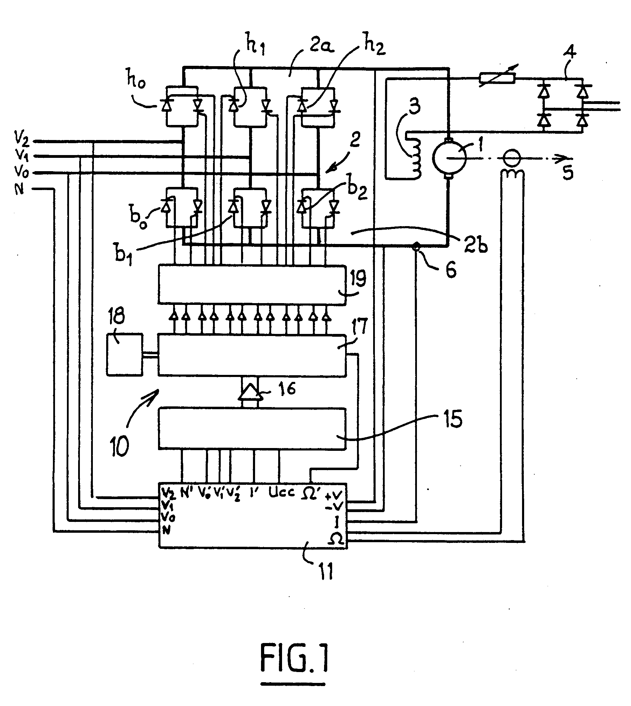

Sur la Fig.1, l'invention est considerée comme étant appliquée à l'alimentation à partir du réseau triphasé d'une machine à courant continu 1, par un double pont de Graetz 2 dont une première portion 2a est destinée à assurer la rotation de la machine dans un premier sens et dont une seconde portion 2b est destinée à assurer la rotation de la machine en sens inverse.

La machine 1 comporte un enroulement d'excitation 3 alimenté de façon classique par un pont redresseur 4.

Sur l'arbre de sortie de la machine 1 est couplé un capteur de vitesse 5 tandis qu'à la sortie du circuit de puissance est prévu un capteur de courant 6 destiné à mesurer la valeur du courant circulant dans la machine 1.

Les ponts 2a et 2b sont connectés aux phases Vo, V1, V2 du réseau.

Au double pont de Graetz 2 est associé un dispositif de déclechement numérique désigné par la référence générale 10.

Ce dispositif de déclenchement comporte un circuit d'interface de mesure 11 comportant des premières entrées connectées aux phases V0,V1,V2 et au neutre N du réseau et des secondes entrées connectées respectivement aux bornes de sortie du circuit de puissance du pont 2, au capteur de vitesse 5 et au capteur de courant 6.

Selon une variante, lorsque le capteur de vitesse 5 est constitué par un codeur incrémental, la mesure de la vitesse peut être exploité directement sans passer par le circuit d'interface de mesure 11.

Le circuit d'interface de mesure 11 a pour fonction essentielle d'assurer l'isolement entre la partie de puissance et la partie de commande du dispositif et de convertir les valeurs des signaux d'entrée qu'il reçoit en valeurs admissibles par la partie de commande.

A la sortie du circuit d'interface 11 est connecté un convertisseur analogique-numérique 15 qui est à son tour relié par un bus 16 à un microprocesseur 17 associé à un ordinateur 18.

Le microprocesseur 17 est connecté aux gâchettes de commande des interrupteurs commandés du double pont de Graetz par l'intermédiaire d'un circuit d'interface de commande 19.

Avant de procéder à la description du fonctionnement du dispositif de déclenchement suivant l'invention, on va exposer dans ce qui suit les détails du procédé de déclenchement que le dispositif met en oeuvre.

Lors de l'apparition d'un creux de tension sur l'une des phases du réseau de la Fig.1, le réseau n'est plus équilibré ce qui pose des problèmes de synchronisation au dispositif de déclenchement qui envoie de ce fait aux gâchettes de commande des interrupteurs du pont des signaux de commande à des moments inopportuns.

Le dispositif de déclenchement apparaît donc comme l'organe le plus sensible aux variations du réseau. De plus, il est au coeur du problème puisque c'est le trait d'union entre les parties "intelligentes" que sont les moyens de régulation et les parties électromécaniques, à savoir le convertisseur et la machine.

Il s'agit donc de mettre au point un système de déclenchement qui, lors de l'apparition de défauts sur le réseau, soit en mesure d'aller "puiser" l'énergie nécessaire là ou elle est disponible, c'est à dire en priorité sur les phases les plus saines.

Le dispositif doit fonctionner en milieu perturbé et, par conséquent, ne disposera plus de repère fixe, donc de possibilité de synchronisation.

Il faut alors :
- abandonner l'utilisation de l'angle d'amorçage $\alpha$ pour la commande;
- piloter le convertisseur uniquement à partir d'une scrutation permamente des tensions du réseau. Ceci permet une réaction immédiate en cas de défaut.

L'ensemble dispositif de déclenchement-pont doit donc être en mesure, à partir d'une tension de référence donnée par la régulation, de fournir une tension de sortie Ucc aussi proche que possible d'une valeur de consigne Ud quel que soit l'état du réseau Vi, et cela, dans la limite de la puissance disponible.

L'intérêt d'axer l'action au niveau du dispositif de déclenchement est triple :
- premièrement, c'est l'organe le plus sensible;
- deuxièmement, l'état du réseau est pris en compte pour le pilotage du convertisseur;
- troisièmement, on peut facilement imaginer "l'échange standard" ou le court-circuitage sur un matériel déjà existant du système de déclenchement classique par un dispositif plus performant, et cela, sans grande modification de l'installation.

Le problème consiste donc à trouver un schéma de commande reposant sur l'état instantané des tensions de phase permettant de reproduire un functionnement comparable à celui obtenu par une commande en $\alpha$ pour un réseau normal.

On va tout d'abord décrire la recherche d'un critère de commutation en étudiant le comportement d'un demi-pont.

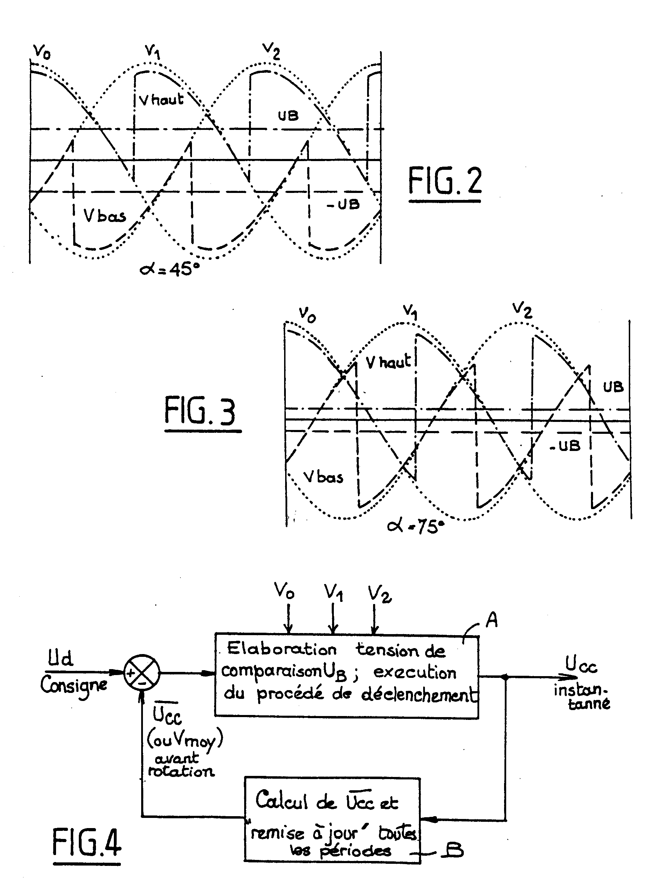

L'observation des formes d'onde de chaque demi-pont d'un pont de Graetz représentées sur les diagrammes des Fig.2 et 3, constituent la tension continue met en évidence de phénomènes intéressants.

On remarque que, pour un angle de commande donné, au moment de la commutation, la valeur moyenne UB des tensions Vi (en conduction) et Vi + 1 (qui va prendre la relève sur le même demi-pont) dépend de l'angle $\alpha$ : cette valeur est liée à l'angle $\alpha$ par la relation :

$$UB = \frac{V(i) + V(i+1)}{2} = f(V, \alpha)$$

qui se déduit des relations suivantes :

Vi - UB < Vi + 1 - UB avant la commutation
Vi - UB > Vi + 1 - UB après la commutation

La phase en conduction est donc celle au potentiel "le plus proche" de UB.

Au moment de la commutation, il y a basculement de la tension du demi-pont de part et d'autre de UB. Il n'y a donc commutation que lorsque la relation précédente n'est plus vérifiée par la phase en conduction, mais vérifiée par celle qui doit prendre la relève dans la rotation naturelle des phases.

4

Il apparaît ainsi un critère de commutation fort intéressant qui repose sur la scrutation permanente des tensions des phases et qui reproduit la commande en $\alpha$ pour un système équilibré. En effet, il faut que la phase en conduction Vcond vérifie la relation :

| UB - Vcond | <|UB - Vi|

Si cette relation n'est plus vérifiée, alors il y a commutation de Vcond sur Vi.

On calcule UB et ou cherche une relation entre UB et Ucc (Valeur moyenne de la tension continue), afin de supprimer $\alpha$ :

Soit un réseau triphasé équilibré :

V0 = Vcos (wt)
V1 = Vcos (wt - 2π/3)
V2 = Vcos (wt - 4π/3)

En étudiant la commutation de V1 sur V2 pour le demi-pont haut pour un angle $\alpha$ donné. On a :

$$UB = \frac{V0 + V1}{2} \quad \text{à} \quad wt = \alpha + \pi/3$$

$$UB = \frac{V}{2} \left[ \cos(wt) + \cos(wt - 2\pi/3) \right]$$

$$= \frac{V}{2} \left[ \cos(\alpha + \pi/3) + \cos(\alpha + \pi/3 - 2\pi/3) \right]$$

Après simplification, on obtient :

$$UB = \frac{V}{2} \cos \alpha$$

On supprime $\alpha$ de l'expression. On sait que, pour un angle $\alpha$ donné, on obtient du côté continu la valeur moyenne Ucc telle que :

$$Ucc = \frac{3\sqrt{3}}{\pi} V \cos\alpha \implies \frac{V}{2} \cos\alpha = \frac{\pi}{6\sqrt{3}} Ucc$$

On obtient finalement :

$$UB = \frac{\pi}{6\sqrt{3}} Ucc$$

Il suffit donc, pour obtenir une tension continue de valeur Ucc, "d'asservir" les tensions de chaque demi-pont à la valeur UB directement proportionnelle à Ucc.

Outre le critère principal permettant la détection des instants de commutation, il est nécessaire, pour des raisons de sécurité, d'introduire certains tests de validation et de butée :

a) Pour qu'il y ait commutation de Vcond sur Vi, il faut que :

Vi > Vcond pour le demi-pont haut,

Vi < Vcond pour le demi-pont bas.

b) Il est nécessaire également que Vi soit différent de Vcond sur le demi-pont complémentaire pour éviter la mise en court-circuit de la charge.

c) Il faut également introduire une buté onduleur afin d'éviter les problèmes de réamorçage ou de défaut de commutation lors du fonctionnement en onduleur.

Etant donné que l'on ne dispose plus de la grandeur $\alpha$ pour limiter la plage de variation de la tension (généralement $\alpha \leq 160°$), on doit mettre au point un critère également basé sur la scrutation des tensions de phase.

En observant les formes d'onde au moment de la commutation pour des valeurs élevées de $\alpha$, on s'aperçoit qu'il y a un problème lorque l'écart entre Vi et Vcond est faible.

Si cet écart est au-dessus d'un certain seuil, il n'y a pas de risque de raté de commutation.

Il faut donc introduire un test qui, lorsque le seuil est franchi, force la commutation, même si le critère principal n'est pas vérifié.

Le fonctionnement de l'algorithme de commande par demi-pont pose cependant quelques problèmes concernant notamment :

- la non linéarité de la réponse,
- la non symétrie de la réponse entre les modes onduleur et redresseur du fait de la butée onduleur,
- les écarts importants entre consigne et tension de sortie du côté continu.

Il et donc nécessaire de modifier le critère pour améliorer les caractéristiques du dispositif.

Au lieu de raisonner sur les ondes des demi-ponts, on prend en compte l'onde complète de la tension continue. Cela permet de gagner un degré de liberté en asservissant directement la tension continu Ucc à une valeur UB à définer.

La démarche suivie pour la recherche d'un critère de commutation est comparable au case précédent. A l'instant de commutation, il y a basculement de la tension continue de part et d'autre d'une valeur moyenne UB.

On étudie la commutation de la phase 0 sur la phase 1 à l'instant wt = $\alpha + \pi/3$. La tension continue Ucc est égale :

Ucc - = V0 - V2 avant la commutation
Ucc + = V1 - V2 après la commutation

Au moment de la commutation, la valeur moyenne UB a pour expression :

$$UB = \frac{Ucc- + Ucc+}{2} = \frac{V0 + V1}{2} - V2$$

On a :

V0 = V cos (wt)
V1 = V cos (wt - $2\pi/3$) à wt = $\alpha + \pi/3$)
V2 = V cos (wt - $4\pi/3$)

$$UB = V \frac{\cos(\alpha + \pi/3) + \cos(\alpha + \pi/3 - 2\pi/3)}{2} - \cos(\alpha + \pi/3 - 4\pi/3)$$

Après simplification :

$$UB = \frac{3V}{2} \cos \alpha$$

On supprime $\alpha$ de l'expression de UB à partir de la relation :

$$Ucc = \frac{3\sqrt{3}}{\pi} V \cos\alpha \implies V \cos\alpha = \frac{Ucc}{3\sqrt{3}}$$

D'où :

$$UB = \frac{\pi}{2\sqrt{3}} Ucc$$

On peut faire les mêmes observations que pour le premier algorithme décrit plus haut. La paire de thyristors en conduction maintient la tension continue au potentiel le plus proche de UB. Si la commutation d'une des phases permet d'améliorer cet écart, il y a alors commutation.

Le critère de commutation est ici donné par la relation (| UB - Vcond | < |UB - Vcond + 1|) dans laquelle Vcond est la tension de la phase en conduction et Vcond + 1 est la tension de la phase sur laquelle a lieu la commutation dès que la relation (|UB - Vcond| < |UB - Vcond + 1|) dans n'est plus vérifiée, Vcond étant égal à Vi ou Vj suivant qu'il s'agit d'une commutation sur le demi-pont haut ou le demi-pont bas du convertisseur.

Les tests principaux de la commutation deviennent :
- Si | VHAUT - VBAS -UB | >|VNHAUT - VBAS- UB| alors commutation d'un redresseur haut
- Si | VHAUT - VBAS -UB | >|VHAUT - VNBAS- UB| alors commutation d'un redresseur bas

UNHAUT, étant la phase devant prendre la relève de UHAUT, en tenant compte de la rotation naturelle des phases, et UNBAS, celle devant prendre la relève de UBAS.

On va maintenant examiner la réponse du système en boucle ouverte.

a) En régime équilibré

L'algorithme se comporte aussi bien que le premier.

b) En régime perturbé, on observe :

- une très nette amélioration de la linéarité,
- une symétrie des réponses entre redresseur et onduleur,
- une diminution très sensible des écarts entre consigne et tension de sortie.

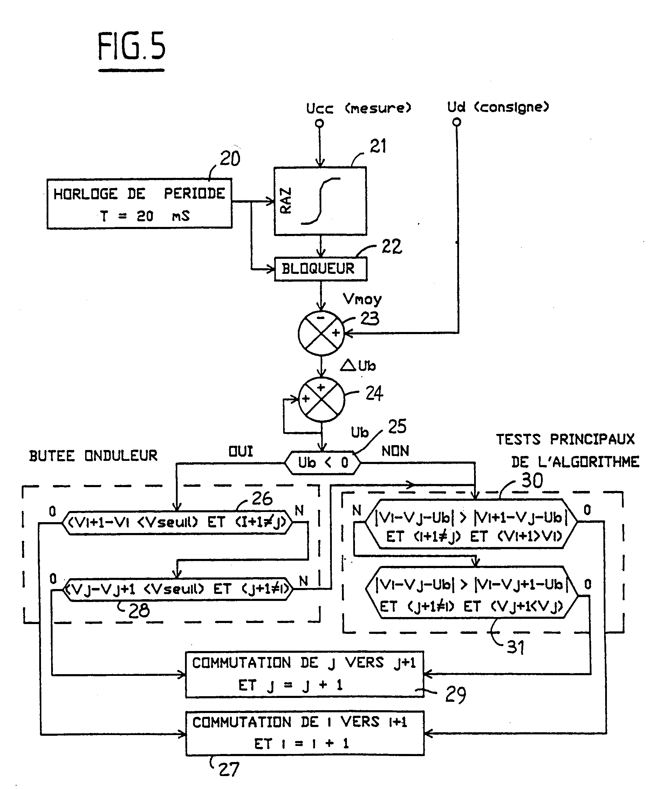

Le fonctionnement du dispositif de la Fig. 1 va être décrit en référence à l'organigramme de la Fig. 5.

Les grandes lignes de ce fonctionnement sont représentées par l'organigramme de la Fig.4.

Dans celui-ci, on met en évidence deux blocs A et B. Le bloc A assure l'élaboration des commandes à partir de la scrutation du réseau selon l'organigramme détaillé de la Fig. 5. Le bloc B ajuste la consigne en fonction de la tension mesurée à la sortie du bloc A.

Les signaux relatifs aux tensions des phases du réseau, de la tension continue de sortie du pont 2 et éventuellement à la vitesse de rotation et à l'intensité du courant d'alimentation de la machine sont appliqués par l'intermédiaire du circuit d'interface 11 et du convertisseur analogique-numérique 15 au microprocesseur 17.

Celui-ci élabore au cours d'une phase 20 de l'organigramme des signaux de base de temps de période T correspondant à la fréquence du réseau d'alimentation.

Au cours d'une phase 21, le signal Ucc relatif à la tension de sortie du pont est intégré pendant une période T.

Au cours de la phase 22, la valeur intégrée du signal Ucc est bloquée à l'issue de la période T considérée et l'opération d'intégration est répétée au cours de la période T suivante après remise à zéro.

Le signal intégré au cours de la phase 21 et bloqué au cours de la phase 22 est représentatif de la valeur moyenne de la tension Ucc au cours de la période T écoulée.

Il est comparé au cours de la phase 23 à une valeur de consigne Ud.

Dans le présent exemple d'une régulation d'un moteur à courant continu, cette consigne est élaborée par une boucle de régulation, notamment en fonction des paramètres de sortie de la machine 1 qui lui sont appliqués.

Le signal $\Delta$ UB représentant l'écart entre la tension de consigne et la tension obtenue à la sortie du dispositif est utilisé pour l'élaboration au cours de la phase 24, du signal UB.

Au cours de la phase 25, on détermine si UB > 0.

Au préalable, on a procédé :

a) à la mémorisation de l'indice j du dernier interrupteur haut, hi commandé.

b) à la mémorisation de l'indice i du dernier interrupteur haut, bj commandé.

Les valeurs i et j initialisées au départ sont quelconques mais distinctes.

Toutes les sommations sur les indices sont effectuées modulo 3.

Enfin, une valeur V seuil préfixée servant de butée de fonctionnement en plein onduleur est établie.

Si UB < 0, on détermine au cours de la phase 26 si Vi + 1 - Vi < Vseuil et i + 1 ≠ j.

Dans l'affirmative, ceci veut dire qu'il faut impérativement commander la commutation de Vi sur Vi + 1, faute de quoi cette commutation ne pourra plus avoir lieu ultérieurement.

On procédé donc à la commutation de la phase Vi vers la phase Vi + 1 au demi-pont supérieur.

Dans la négative, on détermine au cours de la phase 28 si Vj + 1 - Vj < Vseuil et j + 1 ≠ i.

Si tel est le cas, il y a au cours de la phase 29, commutation de la phase Vj à la phase Vj + 1 au demi-pont bas.

En revenant à la phase 25, si UB ne satisfait pas à l'inégalité UB<0, il y a déroulement d'une phase 30, également conditionnée par le résultat négatif de la détermination au cours de la phase 28, de vérification des relations suivantes.

$$(| Vi - Vj - UB | > | Vi + 1 = Vj - UB |)$$

et

$$( i + 1 \neq j) \text{ et } (Vi + 1 > Vi)$$

Si ces relations sont satisfaites, on procède à la commutation de phase Vi en conduction sur la phase Vi + 1 au demi-pont haut.

Si ces relations ne sont pas satisfaites, on vérifie au cours de la phase 31, les relations suivantes.

$$(| Vi - Vj - UB | > | Vi - Vj + 1 - UB |)$$

et

$$( j + 1 \neq i) \text{ et } ( Vj + 1 < Vj)$$

Ces relations étant vérifiées, on revient à la phase 29 de commutation de la phase Vj vers la phase Vj + 1 au demi-pont bas.

L'invention permet donc de disposer d'un système capable de piloter un pont de Graetz, quel que soit l'état du réseau, aussi bien en redresseur qu'en onduleur, en évitant tout trouble de fonctionnement en présence de creux de tension.

Les réponses sont convenables pour des défauts moyens.

Du fait de la symétrie des réponse en mode redresseur et onduleur, ainsi que de la quasi linéarité sur une majeure partie de la caractéristique du déclencheur, ce système peut être inclus dans un système de régulation.

On vient de décrire un procédé général de déclenchement d'un convertisseur électronique à commutation par le réseau.

On a également présenté à titre d'exemple illustratif, un mode de réalisation numérique de mise en oeuvre de ce procédé, appliqué à l'alimentation d'un moteur à courant continue.

On comprendra cependant que d'autres moyens de réalisation de l'invention et notamment des moyens analogiques peuvent également être envisagés tout en restant dans le cadre de l'invention telle que définie par les revendications.

**Revendications**

**1.** Procédé de déclenchement d'un convertisseur électronique polyphasé à commutation par le réseau, consistant à mesurer en permanence les valeurs instantanées des tensions (V0,V1,V2) des phases du réseau d'alimentation du convertisseur, caractérisé en ce qu'il consiste en outre à élaborer une image de la tension continue (Ud) désirée à la sortie du convertisseur, à établir diverses combinaisons possibles de tensions de phase du réseau, à comparer à ladite image de la tension continue désirée, les diverses combinaisons possibles des tensions des phases (V0,V1,V2) en vue de déterminer la combinaison la plus favorable pour la production de ladite tension de sortie et, si ladite combinaison la plus favorable est différente de celle appliquée au convertisseur à l'instant considéré, et si la polarisation des composants concernés du convertisseur le permet, à provoquer la commutation du convertisseur sur ladite combinaison.

2. Procédé suivant la revendication 1, caractérisé en ce que la combinaison des tensions de phases la plus favorable est déterminée par rapport à la valeur moyenne (UB) des tensions de phase au moment d'une commutation,ladite valeur moyenne (UB) étant liée à la tension continue (Ucc) délivrée par le convertisseur, par la relation : UB = $\pi/2 \sqrt{3}$ Ucc, le critère de commutation étant donné par la relation (|UB - Vcond | < |UB - Vcond + 1|) dans laquelle Vcond est la tension de la phase en conduction et Vcond + 1 est la tension de la phase sur laquelle a lieu la commutation dés que la relation (|UB - Vcond | < |UB - Vcond + 1|) n'est plus vérifiée, Vcond étant égal à Vi ou Vj suivant qu'il s'agit d'une commutation sur le demi-pont haut ou le demi-pont bas du convertisseur.

3. Dispositif de déclenchement d'un convertisseur électronique polyphasé destiné à la mise en oeuvre du procédé suivant l'une des revendications 1 et 2, comportant des moyens de mesure des valeurs instantanées (V0,V1, V2) des phases du réseau d'alimentation du convertisseur, caractérisé en ce qu'il comporte en outre des moyens (17) d'élaboration d'une image de la tension continue (Ud) désirée à la sortie du convertisseur, d'établissement de diverses combinaisons possibles des tensions de phase du réseau, de comparaison desdites combinaisons à ladite image de la tension continue désirée (Ud) et des moyens (19) d'application au convertisseur (2) de la combinaison la plus favorable en vue de provoquer sa commutation sur cette combinaison.

4. Dispositif suivant la revendication 3, caractérisé en ce que les moyens d'établissement de l'image de la tension continue désirée (Ud) et de l'élaboration de combinaison des tensions de phases (V0,V1,V2) et de comparaison desdites combinaison avec l'image de la tension désirée sont constitués par un microprocesseur (18) connecté d'une part à un circuit (11) de mesure des tensions de phase (V0,V1,V2 par l'intermédiaire d'un convertisseur analogique-numérique (15) et d'autre part, aux gâchettes de commande du convertisseur par l'intermédiaire d'un circuit d'interface de commande (19).

**Claims**

1. Process for activating a polyphase electronic converter with switching by the mains, consisting of permanently measuring the instantaneous values of voltages (V0,V1,V2) of the phases of the converter supply network, characterized in that it also consists of producing an image of the desired d.c. voltage (Ud) at the converter output, establishing various possible combinations of the network phase voltages, comparing with said image of the desired d.c. voltage the various possible combinations of the phase voltages (V0,V1,V2) with a view to determining the most favourable combination for producing said output voltage and, if said most favourable combination is different from that applied to the converter at the considered instant and if the polarization of the components in question of the converter permits it, bringing about the switching of the converter to said combination.

2. Process according to Claim 1, characterized in that the most favourable combination of phase voltages is determined with respect to the mean value (UB) of the phase voltages at the time of a switching operation, said mean value (UB) being linked with the d.c. voltage (Ucc) supplied by the converter by the relation: UB = $\pi/2 \sqrt{3}$ Ucc, the switching criterion being given by the relation (|UB - Vcond |<| UB - Vcond + 1 |) in which Vcond is the voltage of the phase in conduction and Vcond + 1 is the voltage of the phase on which the switching takes place as soon as the relation (|UB - Vcond |<| UB - Vcond + 1 |) is no longer proved, Vcond being equal to Vi or Vj as a function of whether it is a switching on the upper half-bridge or the lower half-bridge of the converter.

3. Device for activating a polyphase electronic converter for performing the process according to either of the claims 1 and 2, having means for measuring the instantaneous values (V0,V1,V2) of the phases of the converter supply network, characterized in that it also incorporates means (17) for producing an image of the desired d.c. voltage (Ud) at the output of the converter, the establishment of various possible combinations of the phase voltages of the network, a comparison of said combinations with said image of the desired d.c. voltage (Ud) and means (19) for applying to the converter (2) the most favourable combination with a view to bringing about its switching to the said combination.

4. Device according to claim 3, characterized in that the means for establishing the image of the desired d.c. voltage (Ud) and the production of the combination of phase voltages (V0,V1,V2) and the comparison of said combination with the image of the desired voltage are constituted by a microprocessor (18) connected on the one hand to a circuit (11) for measuring the phase voltages (V0,V1, V2) by means of an analog-digital converter (15) and on the other hand to the control gates of the converter by means of a control interface circuit (19).

**Patentansprüche**

1. Verfahren zur Triggerung eines elektronischen Mehrphasen-Schaltnetzteiles durch das Netz, bei dem man permanent die Momentanwerte der Spannungen (V0, V1, V2) der Phasen des Versorgungsnetzes des Schaltnetzteiles mißt, dadurch gekennzeichnet, daß man desweiteren ein Bild der gewünschten Gleichspannung (Ud) am Ausgang des Schaltnetzteiles vorsieht, diverse mögliche Kombinationen der Phasenspannungen des Netzes erstellt, die diversen möglichen Kombinationen der Phasenspannungen (V0, V1, V2) mit dem Bild der gewünschten Gleichspannung vergleicht, um die günstigste Kombination für die Erzeugung dieser Ausgangsspannung zu ermitteln, und, wenn sich diese günstigste Kombination von der am Schaltnetzteil im betrachteten Moment anliegenden unterscheidet und es die Polarisation der betreffenden Komponenten des Schaltnetzteiles ermöglicht, die Schaltung des Schaltnetzteiles auf diese Kombination bewirkt.

2. Verfahren nach Anspruch 1, dadurch gekennzeichnet, daß man die günstigste Kombination der Phasenspannungen mit Hilfe des Mittelwertes (UB) der Phasenspannungen im Moment einer Schaltung bestimmt, wobei dieser Mittelwert (UB) mit der vom Schaltnetzteil gelieferten Gleichspannung (Ucc) über die Beziehung $UB = \pi/2 \sqrt{3}$ Ucc verknüpft ist, wobei das Schaltkriterium durch die Beziehung (|UB - Vcond | < | UB - Vcond + 1 |) gegeben ist, wobei ferner Vcond die Spannung der leitenden Phase und Vcond + 1 die Spannung der Phase ist, auf die geschaltet wird, sobald die Beziehung (|UB - Vcond| < |UB - Vcond + 1|) nicht mehr erfüllt ist, und Vcond gleich Vi oder gleich Vj ist, je nachdem, ob es sich um eine Schaltung auf die obere Halbbrücke oder die untere Halbbrücke des Schaltnetzteiles handelt.

3. Vorrichtung zur Triggerung eines elektronischen Mehrphasen-Schaltnetzteiles zur Durchführung des Verfahrens nach einem der Patentansprüche 1 und 2 mit Einrichtungen zum Messen der Momentanwerte (V0, V1, V2) der Phasen des Versorgungsnetzes des Schaltnetzteiles, dadurch gekennzeichnet, daß sie desweiteren Einrichtungen (17) zum Vorsehen eines Bildes der gewünschten Gleichspannung (Ud) am Ausgang des Schaltnetzteiles, zur Erstellung von diversen möglichen Kombinationen der Phasenspannungen des Netzes, zum Vergleichen dieser Kombinationen mit dem Bild der gewünschten Gleichspannung (Ud) und Einrichtungen (19) zum Anlegen der günstigsten Kombination an das Schaltnetzteil (2), um die Schaltung auf diese Kombination zu bewirken, aufweist.

4. Vorrichtung nach Anspruch 3, dadurch gekennzeichnet daß die Einrichtungen zum Vorsehen des Bildes der gewünschten Gleichspannung (Ud) und zum Erstellen der Kombinationen der Phasenspannungen (V0, V1, V2) sowie zum Vergleichen dieser Kombinationen mit dem Bild der gewünschten Spannung durch einen Mikroprozessor (18) gebildet sind, der einerseits an eine Schaltung (11) zum Messen der Phasenspannungen (V0, V1, V2) mit Hilfe eines A/D-Wandlers (15) und andererseits über eine Schnittstellensteuerschaltung (19) an Steuertore des Schaltnetzteiles geschaltet ist.

FIG.1

EP 0 363 250 B1

FIG.2

$\alpha = 45°$

FIG.3

$\alpha = 75°$

FIG.4

12

# FIG.5

Ucc (mesure)    Ud (consigne)

20

```
HORLOGE  DE   PERIODE
      T  =  20   mS
```

21

RAZ

22

BLOQUEUR

Vmoy

23

△Ub

24

Ub    25

Ub < 0

OUI    NON

BUTEE ONDULEUR

TESTS PRINCIPAUX
DE L'ALGORITHME

30

26

(VI+1−VI <Vseuil) ET (I+1≠J)

|VI−VJ−Ub| > |VI+1−VJ−Ub|
ET (I+1≠J) ET (VI+1>VI)

28

(VJ−VJ+1 <Vseuil) ET (J+1≠I)

|VI−VJ−Ub| > |VI−VJ+1−Ub|
ET (J+1≠I) ET (VJ+1<VJ)

31

```
COMMUTATION DE J VERS J+1
      ET J = J + 1
```

29

```
COMMUTATION DE I VERS I+1
      ET I = I + 1
```

27